# EUROPEAN PATENT APPLICATION

(11) **EP 4 744 974 A1**
(43) Date of publication of application: **20.05.2026**
(21) Application number: 25208497.5
(22) Date of filing: 14.10.2025
(51) Int. Cl.: B60R 25/24, H04W 4/80, H04W 12/06, H04W 12/08, H04W 12/50

(54) **SHARING SYSTEM OF CAR CONTROLLER DEVICE**

(30) Priority: 18.11.2024 TW 113144262
(71) Applicant: IVTES LTD., New Taipei City (TW)
(72) Inventor: CHEN, Chi-Ting, New Taipei City (TW)
(74) Representative: Savi, Massimiliano

(57) **Abstract**

A sharing system of a car controller device uses a cloud server (30) to connect a first electronic device (10) and a second electronic device (20). The two electronic devices and a car key controller (60) are connected to a Bluetooth car controller device (40). When a car owner initiates a sharing function through the first electronic device (10), the cloud server (30) verifies the second electronic device (20), and when verified, the cloud server (30) sends an authorization confirmation to the second electronic device (20). The second electronic device (20) may send out a locking/unlocking signal to the Bluetooth car controller device (40), allowing the Bluetooth car controller device (40) to lock/unlock a car through the car key controller (60). The car owner can digitally authorize a trustee to control the car without having to hand over a car key.

## Description

### 1. Field of the Invention

The present invention relates to a sharing system and a sharing method, more particularly a sharing system of a car controller device.

### 2. Description of the Related Art

When people need to travel from a place to another, people often choose to walk, however as a traveling distance increases, walking requires significant physical effort and takes a significant amount of time. To mitigate physical effort and time required for traveling long distances, various transportations are invented, including cars, which have become one of the most popular means of transportation for many. A car allows a driver to effortlessly and efficiently move between places.

In society, most cars are privately owned, and in many cases, a car owner only owns one car key. When a family member or a friend wishes to borrow the car from the car owner, or when the car owner wishes to lend the car to the family member or the friend, the car owner needs to physically hand over the car key to the family member or the friend. However, when the car owner does not carry the car key, the car key cannot be passed from the car owner to the family member or the friend, hence the family member or the friend cannot be physically authorized to drive the car, because the car key is the physical authorization for driving the car.

To overcome the aforementioned problem, the present invention provides a sharing system of a car controller device. The sharing system of the car controller device allows the car owner to digitally authorize a person to drive the car through using an electronic device to communicate with another electronic device, thus sharing the authorization to drive the car digitally.

The sharing system of the car controller device includes a first electronic device, a second electronic device, a cloud server, a Bluetooth car controller device, and a car key controller.

The cloud server is communicatively connected to the first electronic device and the second electronic device. The Bluetooth car controller device is configured to be mounted in a car, and the Bluetooth car controller device is connected to the first electronic device or the second electronic device. The car key controller is additionally connected to the Bluetooth car controller device.

When the first electronic device initiates a sharing function, the first electronic device sends a sharing request signal to the cloud server. When the cloud server receives the sharing request signal, the cloud server sends a confirmation link to the second electronic device according to the sharing request signal. When the second electronic device receives the confirmation link, the second electronic device connects to the cloud server through the confirmation link, and the second electronic device sends an authorization verification request to the cloud server. When the cloud server receives the authorization verification request, the cloud server proceeds to verify the second electronic device according to the authorization verification request. When the cloud server verifies that the second electronic device has authorization, the cloud server sends an authorization confirmation to the second electronic device.

When the second electronic device receives the authorization confirmation, the second electronic device connects to the Bluetooth car controller device according to the authorization confirmation, and the second electronic device sends the authorization confirmation to the Bluetooth car controller device. When the Bluetooth car controller device receives the authorization confirmation, the Bluetooth car controller device proceeds to Bluetooth pair with the second electronic device according to the authorization confirmation. When the Bluetooth car controller device is successfully Bluetooth paired with the second electronic device, the Bluetooth car controller device sends a Bluetooth paired notification to the second electronic device. When the second electronic device receives the Bluetooth paired notification, the second electronic device sends a locking signal or an unlocking signal to the Bluetooth car controller device. When the Bluetooth car controller device receives the locking signal, the Bluetooth car controller device sends a locking command to the car key controller, and when the car key controller receives the locking command, the car key controller locks the car according to the locking command. When the Bluetooth car controller device receives the unlocking signal, the Bluetooth car controller device sends an unlocking command to the car key controller, and when the car key controller receives the unlocking command, the car key controller unlocks the car according to the unlocking command.

As a result, when a car owner uses the first electronic device and the first electronic device initiates the sharing function, the cloud server would receive the sharing request signal and correspondingly send the confirmation link to the second electronic device, wherein the second electronic device belongs to a trustee. The trustee can use the second electronic device to connect to the cloud server for submitting the authorization verification request. Once the second electronic device is verified by the cloud server, the trustee can subsequently use the second electronic device to Bluetooth pair with the Bluetooth car controller device. After the second electronic device is successfully Bluetooth paired with the Bluetooth car controller device, the trustee can then lock the car through sending the locking signal to the Bluetooth car controller device, or unlock the car through sending the unlocking signal to the Bluetooth car controller device. As a result, the trustee with the second electronic device may be digitally authorized to control the car. More specifically, by having the car owner initiating the sharing function through the first electronic device, the car owner no longer needs to hand over the physical car key to the trustee for passing on the authorization to control the car. Through the sharing system of the car controller device, the car owner is able to conveniently share a right to control the car with the trustee.

### IN THE DRAWINGS

Fig. 1 is a block diagram of a sharing system of a car controller device of the present invention.
Fig. 2A and Fig. 2B are flow charts of an embodiment of the present invention.
Fig. 3 is a flow chart of a first embodiment of the sharing system of the car controller device of the present invention generating a locking/unlocking signal.
Fig. 4 is a flow chart of a second embodiment of the sharing system of the car controller device of the present invention generating the locking/unlocking signal.

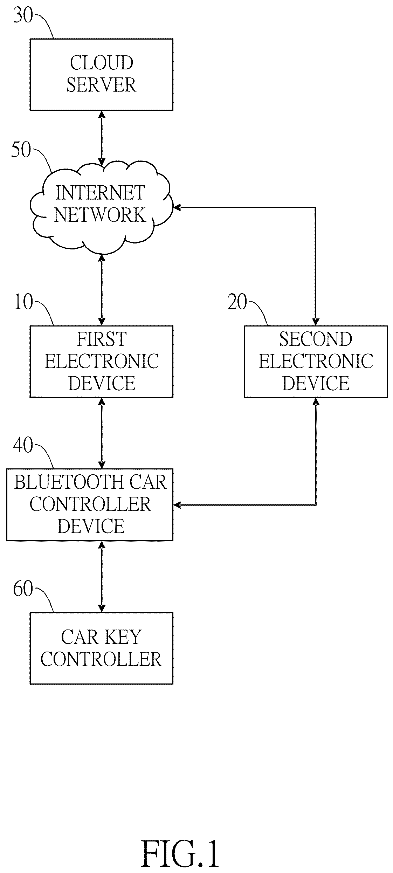

With reference to Fig. 1, the present invention provides a sharing system of a car controller device that includes a first electronic device 10, a second electronic device 20, a cloud server 30, a Bluetooth car controller device 40, and a car key controller 60.

The first electronic device 10 is owned by a car owner, and the car owner, as the name suggests, owns a car. The second electronic device 20 is owned by a trusted person whom the car owner has entrusted to share the car with, or in other words, the second electronic device 20 is owned by a trustee. The Bluetooth car controller device 40 is mounted in the car owned by the car owner, and the car key controller 60 is configured to lock/unlock the car owned by the car owner.

The first electronic device 10, the second electronic device 20, and the cloud server 30 are communicatively connected through an Internet network 50. The Bluetooth car controller device 40 is connected to the first electronic device 10 or the second electronic device 20. The car key controller 60 is additionally connected to the Bluetooth car controller device 40.

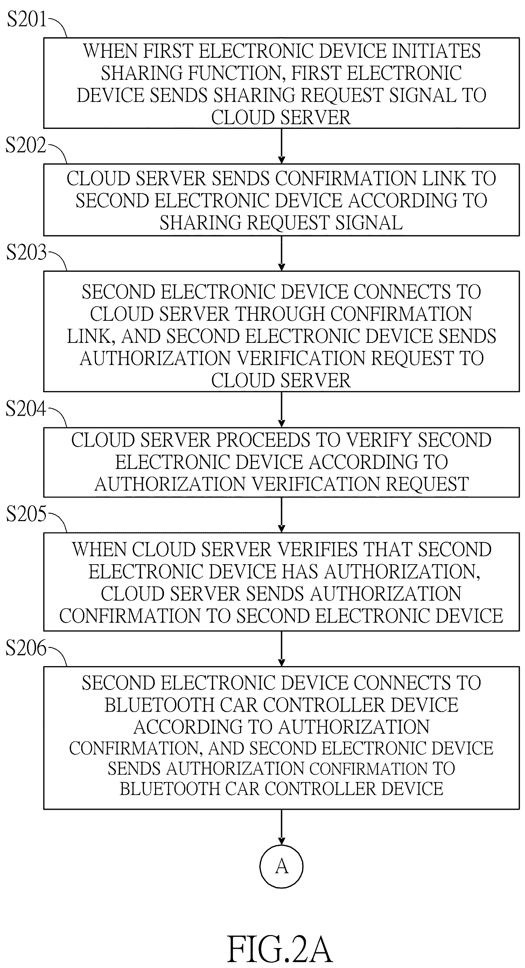

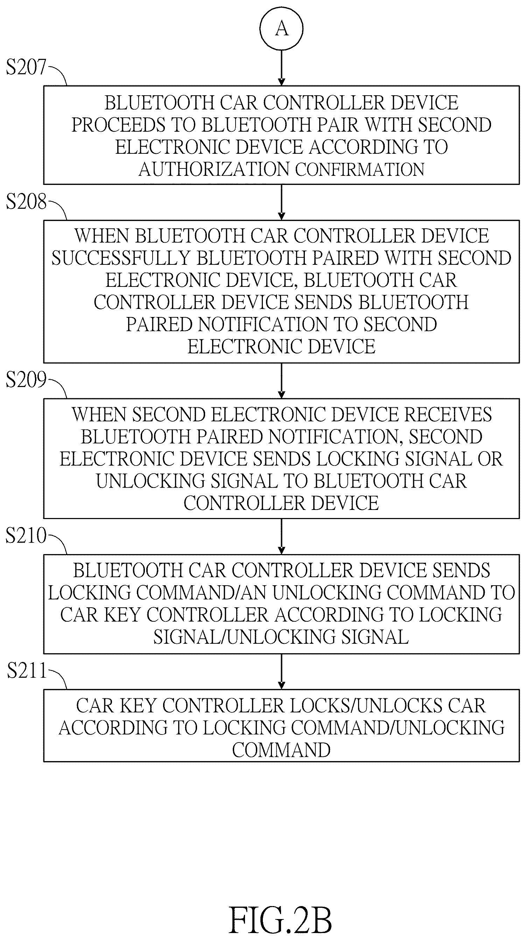

With references to Fig. 2A and Fig. 2B, when the first electronic device 10 initiates a sharing function, the first electronic device 10 sends a sharing request signal to the cloud server 30 (S201). When the cloud server 30 receives the sharing request signal, the cloud server 30 sends a confirmation link to the second electronic device 20 according to the sharing request signal (S202). When the second electronic device 20 receives the confirmation link, the second electronic device 20 connects to the cloud server 30 through the confirmation link, and the second electronic device 20 sends an authorization verification request to the cloud server 30 (S203). When the cloud server 30 receives the authorization verification request, the cloud server 30 proceeds to verify the second electronic device 20 according to the authorization verification request (S204). When the cloud server 30 verifies that the second electronic device 20 has authorization, the cloud server 30 sends an authorization confirmation to the second electronic device 20 (S205).

When the second electronic device 20 receives the authorization confirmation, the second electronic device 20 connects to the Bluetooth car controller device 40 according to the authorization confirmation, and the second electronic device 20 sends the authorization confirmation to the Bluetooth car controller device 40 (S206). When the Bluetooth car controller device 40 receives the authorization confirmation, the Bluetooth car controller device 40 proceeds to Bluetooth pair with the second electronic device 20 according to the authorization confirmation (S207). When the Bluetooth car controller device 40 is successfully Bluetooth paired with the second electronic device 20, the Bluetooth car controller device 40 sends a Bluetooth paired notification to the second electronic device 20 (S208). When the second electronic device 20 receives the Bluetooth paired notification, the second electronic device 20 sends a locking signal or an unlocking signal to the Bluetooth car controller device 40 (S209). When the Bluetooth car controller device 40 receives the locking signal/the unlocking signal, the Bluetooth car controller device 40 sends a locking command/an unlocking command to the car key controller 60 according to the locking signal/the unlocking signal (S210). When the car key controller 60 receives the locking command/the unlocking command, the car key controller 60 locks/unlocks the car according to the locking command/the unlocking command (S211).

After the second electronic device 20 is successfully Bluetooth paired with the Bluetooth car controller device 40, the trustee can lock the car through sending the locking signal from the second electronic device 20 to the Bluetooth car controller device 40, or unlock the car through sending the unlocking signal from the second electronic device 20 to the Bluetooth car controller device 40. Once the car is unlocked by the trustee with the second electronic device 20, the trustee can then enter the car and proceed to further control the car from inside the car. Overall, the trustee with the second electronic device 20 may be digitally authorized to control the car. More specifically, by having the car owner initiating the sharing function through the first electronic device 10, the car owner no longer needs to hand over the physical car key to the trustee for passing on the authorization to control the car. Through the sharing system of the car controller device, the car owner is able to conveniently share a right to control the car to the trustee.

In an embodiment, the first electronic device 10 of the car owner is a desktop computer, a laptop, a smart phone, a tablet computer, a smart wearable device, or a mobile communication device. The second electronic device 20 of the trustee is a portable device, such as a smart phone, a tablet computer, a smart wearable device, or a mobile communication device.

In an embodiment, when the car owner wishes to share the car to the trustee, the car owner would first install an application (APP) on the first electronic device 10, and then through executing the APP, the first electronic device 10 may connect to the cloud server 30 through the Internet network 50, thus allowing the car owner to register on the cloud server 30 by inputting a car owner identification information and a car information through the first electronic device 10. The car owner identification information includes an account number and a password registered by the car owner. The car owner identification information also includes an electronic device identification number of the first electronic device 10, wherein the electronic device identification number is, for example, an international mobile equipment identity (IMEI). In an embodiment, the car information includes a device serial of the Bluetooth car controller device 40 or a device identification number of the Bluetooth car controller device 40. In another embodiment, the car information includes a car serial of the car or a car plate number of the car. The cloud server 30 stores the car owner identification information and the car information, and the cloud server 30 allows the car owner to use the APP on the first electronic device 10 to send the car owner identification information from the first electronic device 10 to the cloud server 30 for login verification. This allows the cloud server 30 to authenticate whether indeed the car owner of the car is accessing the cloud server 30 from the first electronic device 10.

After the car owner is registered, whenever the car owner wishes to share the car with the trustee, the car owner would ask the trustee to install the APP on the second electronic device 20. The car owner would open the APP on the first electronic device 10, login to the cloud server 30, and initiate the sharing function, thus allowing the first electronic device 10 to send the sharing request signal to the cloud server 30. In the present embodiment, the sharing request signal sent from the first electronic device 10 to the cloud server 30 includes a trustee account information.

After the cloud server 30 receives the sharing request signal, the cloud server 30 sends the confirmation link to the second electronic device 20 according to the sharing request signal. In the present embodiment, the cloud server 30 first generates the confirmation link, and then the cloud server 30 sends the confirmation link to the second electronic device 20 via a text message, a Short Message Service (SMS), an email, or a messaging application such as Line, WhatsApp, Facebook, WeChat, Messenger, Skype, etc. In an embodiment, the confirmation link is a uniform resource locator (url) that is configured to connect the second electronic device 20 to the cloud server 30.

When the second electronic device 20 receives the confirmation link, the second electronic device 20 connects to the cloud server 30 by using the confirmation link, and the second electronic device 20 sends the authorization verification request to the cloud server 30. In the present embodiment, the authorization verification request sent from the second electronic device 20 to the cloud server 30 includes a to-be-verified trustee account information.

When the cloud server 30 receives the authorization verification request, the cloud server 30 proceeds to verify the second electronic device 20 according to the authorization verification request. In the present embodiment, when the cloud server 30 proceeds to verify the second electronic device 20 according to the authorization verification request, the cloud server 30 verifies whether the to-be-verified trustee account information is same as the trustee account information. When the to-be-verified trustee account information is same as the trustee account information, the cloud server 30 thus verifies that the second electronic device 20 has authorization and passes the verification. In an embodiment, the trustee account information includes a trustee email address or a trustee phone number. As such, when the car owner initiates the sharing function, the car owner may first configure the trustee email address or the trustee phone number as a basis for verification through the first electronic device 10, and then allowing the first electronic device 10 to send the sharing request signal containing the basis for verification to the cloud server 30, thus allowing the cloud server 30 to obtain the basis for verification.

After the cloud server 30 verifies the second electronic device 20 according to the basis for verification, the cloud server 30 sends the authorization confirmation to the second electronic device 20. In the present embodiment, the authorization confirmation sent from the cloud server 30 to the second electronic device 20 includes a Bluetooth pairing number. Since the first electronic device 10 is able to connect to the Bluetooth car controller device 40 through Bluetooth pairing, the Bluetooth car controller device 40 is able to store a Bluetooth verification number used for Bluetooth pairing with the first electronic device 10.

When the second electronic device 20 receives the authorization confirmation, the second electronic device 20 connects to the Bluetooth car controller device 40 according to the authorization confirmation, and the second electronic device 20 sends the authorization confirmation to the Bluetooth car controller device 40.

When the Bluetooth car controller device 40 receives the authorization confirmation, the Bluetooth car controller device 40 proceeds to Bluetooth pair with the second electronic device 20 according to the authorization confirmation. In the present embodiment, when the Bluetooth car controller device 40 attempts to Bluetooth pair with the second electronic device 20 according to the authorization confirmation, the Bluetooth car controller device 40 verifies whether the Bluetooth verification number matches the Bluetooth pairing number of the second electronic device 20. When the Bluetooth car controller device 40 verifies that the Bluetooth verification number matches the Bluetooth pairing number of the second electronic device 20, the Bluetooth car controller device 40 is thus Bluetooth paired with the second electronic device 20. In an embodiment, the Bluetooth verification number includes a car owner electronic device identification number. For example, the car owner electronic device identification number is the international mobile equipment identity (IMEI) of the first electronic device 10.

When the Bluetooth car controller device 40 is Bluetooth paired with the second electronic device 20, the Bluetooth car controller device 40 sends the Bluetooth paired notification to the second electronic device 20, and thus the second electronic device 20 can subsequently send the locking signal or the unlocking signal to the Bluetooth car controller device 40.

When the Bluetooth car controller device 40 receives the locking signal, the Bluetooth car controller device 40 sends the locking command to the car key controller 60, and when the car key controller 60 receives the locking command, the car key controller 60 locks the car according to the locking command. When the Bluetooth car controller device 40 receives the unlocking signal, the Bluetooth car controller device 40 sends the unlocking command to the car key controller 60, and when the car key controller 60 receives the unlocking command, the car key controller 60 unlocks the car according to the unlocking command.

For example, the car key controller 60 is a car key of the car, and the car key includes a locking button and an unlocking button thereon, for allowing the car owner to remotely lock/unlock the car by pressing the locking button/the unlocking button. The Bluetooth car controller device 40 is connected to the car key controller 60. More particularly, the locking button and the unlocking button of the car key are mounted on a circuit of the car key, and the Bluetooth car controller device 40 includes a signal output circuit (not shown in figures) that is configured to electrically connect the circuit of the car key. The signal output circuit of the Bluetooth car controller device 40 is able to mimic and output an electric signal resembling the locking button or the unlocking button being pressed, hence, the Bluetooth car controller device 40 is able to mimic and output the locking command or the unlocking command.

Even though the car key controller 60 is produced by a car factory of the car, and even though the car key controller 60 is specially encrypted for controlling the car to lock/unlock, the Bluetooth car controller device 40 merely mimics and outputs the electric signal resembling the locking button or the unlocking button being pressed. Therefore, in terms of the car key controller 60, when receiving the locking command/the unlocking command, the car key controller 60 only determines that the locking button/the unlocking button is being pushed, and thus the car key controller 60 commands the car to lock/unlock. In other words, the Bluetooth car controller device 40 avoids altering an encryption signal sent by the car key controller 60 to the car, the Bluetooth car controller device 40 merely replaces the functionalities of the locking button and the unlocking button. As a result, the car key controller 60 still locks/unlocks the car according to its original factory settings.

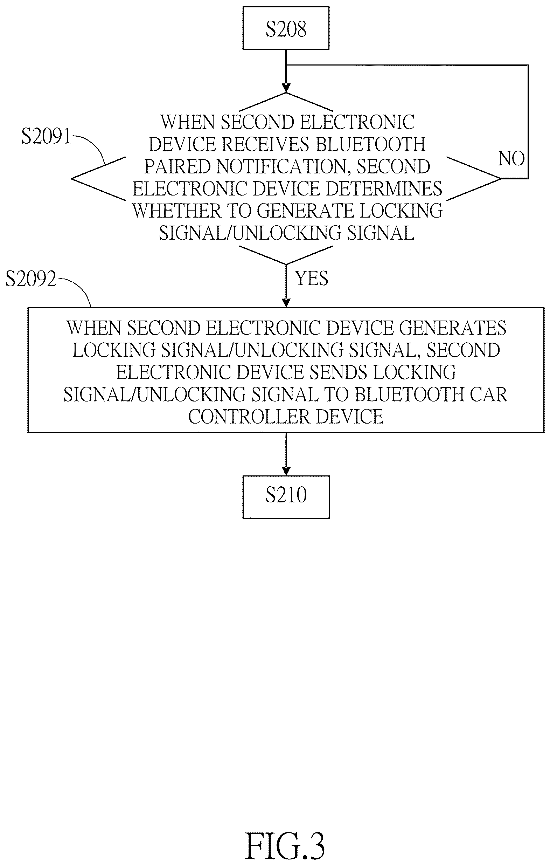

With reference to Fig. 3, a first embodiment of the sharing system of the car controller device of the present invention generating the locking/unlocking signal is configured so that when the second electronic device 20 receives the Bluetooth paired notification, the second electronic device 20 first determines whether to generate the locking signal/the unlocking signal (S2091). When the second electronic device 20 generates the locking signal/the unlocking signal, only then does the second electronic device 20 send the locking signal/the unlocking signal to the Bluetooth car controller device 40 (S2092). In the present invention, the trustee is able to use the APP that is executed by the second electronic device 20. In the APP, the APP allows the second electronic device 20 to display a locking button and an unlocking button. When the trustee selects the locking button displayed on the APP, the second electronic device 20 thus generates the locking signal. When the trustee selects the unlocking button displayed on the APP, the second electronic device 20 thus generates the unlocking signal. In other words, the trustee is able to control the second electronic device 20, thus allowing the second electronic device 20 to generate the locking signal/the unlocking signal, and as a result, locking/unlocking the car.

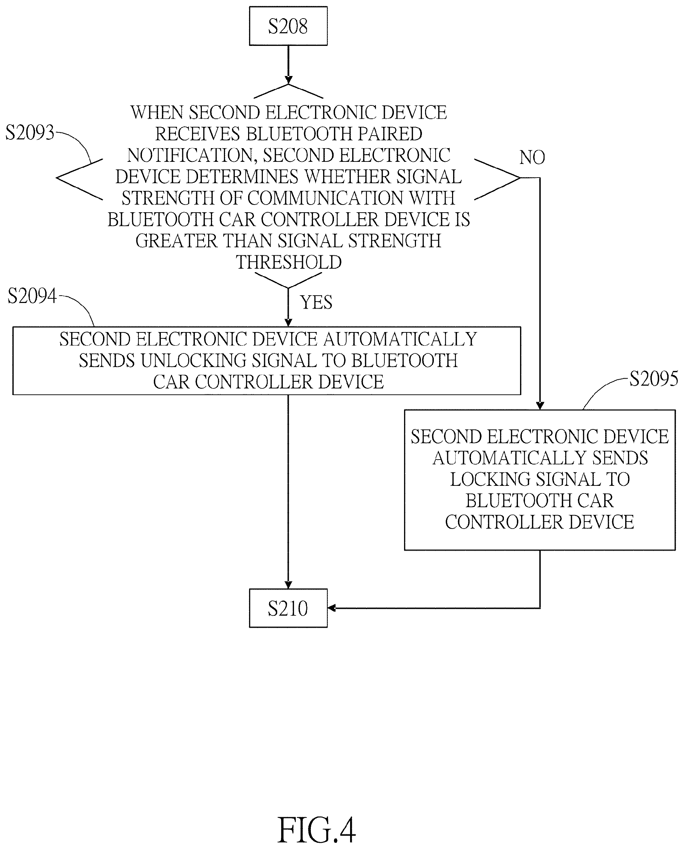

With reference to Fig. 4, a second embodiment of the sharing system of the car controller device of the present invention generating the locking/unlocking signal is configured so that when the second electronic device 20 receives the Bluetooth paired notification, the second electronic device 20 first determines whether a signal strength of communication with the Bluetooth car controller device 40 is greater than a signal strength threshold (S2093). When the signal strength of communication with the Bluetooth car controller device 40 is greater than the signal strength threshold, the second electronic device 20 automatically sends the unlocking signal to the Bluetooth car controller device 40 (S2094). When the signal strength of communication with the Bluetooth car controller device 40 is less than or equal to the signal strength threshold, the second electronic device 20 automatically sends the locking signal to the Bluetooth car controller device 40 (S2095).

In the present embodiment, the trustee is able to use the APP that is executed by the second electronic device 20. Through executing the APP, the second electronic device 20 is able to obtain the signal strength of communication with the Bluetooth car controller device 40. The signal strength of communication between the second electronic device 20 and the Bluetooth car controller device 40 is inversely proportional to a distance between the second electronic device 20 and the Bluetooth car controller device 40. Or simply, the closer the second electronic device 20 is to the Bluetooth car controller device 40, the greater the signal strength of communication with the Bluetooth car controller device 40 is for the second electronic device 20. Vice versa, the further the second electronic device 20 is to the Bluetooth car controller device 40, the less the signal strength of communication with the Bluetooth car controller device 40 is for the second electronic device 20. Through obtaining the signal strength of communication with the Bluetooth car controller device 40, the second electronic device 20 is able to determine the distance between itself and the Bluetooth car controller device 40.

When the trustee with the second electronic device 20 intends to get in the car, the distance between the second electronic device 20 and the Bluetooth car controller device 40 would shorten, and thus the signal strength of communication with the Bluetooth car controller device 40 would become greater than the signal strength threshold for the second electronic device 20. In this situation, the second electronic device 20 would automatically generate the unlocking signal and automatically send the unlocking signal to the Bluetooth car controller device 40.

When the trustee with the second electronic device 20 intends to leave the car, the distance between the second electronic device 20 and the Bluetooth car controller device 40 would increase, and thus the signal strength of communication with the Bluetooth car controller device 40 would become less than or equal to the signal strength threshold for the second electronic device 20. In this situation, the second electronic device 20 would automatically generate the locking signal and automatically send the locking signal to the Bluetooth car controller device 40.

In other words, in this embodiment, the second electronic device 20 is able to automatically send out the locking signal or the unlocking signal according to an automatic determination of the signal strength of communication with the Bluetooth car controller device 40. As a result, the second electronic device 20 is able to automatically control the car to lock or to unlock for the trustee with great efficiency and convenience.

## Claims

1. A sharing system of a car controller device, **characterized in that** the sharing system comprises:
a first electronic device (10);
a second electronic device (20);
a cloud server (30), communicatively connected to the first electronic device (10) and the second electronic device (20);
a Bluetooth car controller device (40), configured to be mounted in a car, and connected to the first electronic device (10) or the second electronic device (20);
a car key controller (60), connected to the Bluetooth car controller device (40);
wherein when the first electronic device (10) initiates a sharing function, the first electronic device (10) sends a sharing request signal to the cloud server (30);
wherein when the cloud server (30) receives the sharing request signal, the cloud server (30) sends a confirmation link to the second electronic device (20) according to the sharing request signal;
wherein when the second electronic device (20) receives the confirmation link, the second electronic device (20) connects to the cloud server (30) through the confirmation link, and the second electronic device (20) sends an authorization verification request to the cloud server (30);
wherein when the cloud server (30) receives the authorization verification request, the cloud server (30) proceeds to verify the second electronic device (20) according to the authorization verification request;
wherein when the cloud server (30) verifies that the second electronic device (20) has authorization, the cloud server (30) sends an authorization confirmation to the second electronic device (20);
wherein when the second electronic device (20) receives the authorization confirmation, the second electronic device (20) connects to the Bluetooth car controller device (40) according to the authorization confirmation, and the second electronic device (20) sends the authorization confirmation to the Bluetooth car controller device (40);
wherein when the Bluetooth car controller device (40) receives the authorization confirmation, the Bluetooth car controller device (40) proceeds to Bluetooth pair with the second electronic device (20) according to the authorization confirmation;
wherein when the Bluetooth car controller device (40) is successfully Bluetooth paired with the second electronic device (20), the Bluetooth car controller device (40) sends a Bluetooth paired notification to the second electronic device (20);
wherein when the second electronic device (20) receives the Bluetooth paired notification, the second electronic device (20) sends a locking signal or an unlocking signal to the Bluetooth car controller device (40);
wherein when the Bluetooth car controller device (40) receives the locking signal, the Bluetooth car controller device (40) sends a locking command to the car key controller (60), and when the car key controller (60) receives the locking command, the car key controller (60) locks the car according to the locking command;
wherein when the Bluetooth car controller device (40) receives the unlocking signal, the Bluetooth car controller device (40) sends an unlocking command to the car key controller (60), and when the car key controller (60) receives the unlocking command, the car key controller (60) unlocks the car according to the unlocking command.

2. The sharing system as claimed in claim 1, wherein when the second electronic device (20) receives the Bluetooth paired notification, the second electronic device (20) first determines whether to generate the locking signal/the unlocking signal;
wherein when the second electronic device (20) generates the locking signal/the unlocking signal, only then does the second electronic device (20) send the locking signal/the unlocking signal to the Bluetooth car controller device (40).

3. The sharing system as claimed in claim 1, wherein when the second electronic device (20) receives the Bluetooth paired notification, the second electronic device (20) first determines whether a signal strength of communication with the Bluetooth car controller device (40) is greater than a signal strength threshold;
wherein when the signal strength of communication with the Bluetooth car controller device (40) is greater than the signal strength threshold, the second electronic device (20) automatically sends the unlocking signal to the Bluetooth car controller device (40).

4. The sharing system as claimed in claim 3, wherein when the signal strength of communication with the Bluetooth car controller device (40) is less than or equal to the signal strength threshold, the second electronic device (20) automatically sends the locking signal to the Bluetooth car controller device (40).

5. The sharing system as claimed in claim 1, wherein the sharing request signal sent from the first electronic device (10) to the cloud server (30) comprises a trustee account information;
wherein the authorization verification request sent from the second electronic device (20) to the cloud server (30) comprises a to-be-verified trustee account information;
wherein when the cloud server (30) proceeds to verify the second electronic device (20) according to the authorization verification request, the cloud server (30) verifies whether the to-be-verified trustee account information is same as the trustee account information;
wherein when the to-be-verified trustee account information is same as the trustee account information, the cloud server (30) thus verifies that the second electronic device (20) has authorization and passes the verification.

6. The sharing system as claimed in claim 5, wherein the trustee account information comprises a trustee email address or a trustee phone number.

7. The sharing system as claimed in claim 1, wherein the authorization confirmation sent from the cloud server (30) to the second electronic device (20) comprises a Bluetooth pairing number;
wherein the Bluetooth car controller device (40) stores a Bluetooth verification number;
wherein when the Bluetooth car controller device (40) attempts to Bluetooth pair with the second electronic device (20) according to the authorization confirmation, the Bluetooth car controller device (40) verifies whether the Bluetooth verification number matches the Bluetooth pairing number of the second electronic device (20);
wherein when the Bluetooth verification number matches the Bluetooth pairing number of the second electronic device (20), the Bluetooth car controller device (40) is thus Bluetooth paired with the second electronic device (20).

8. The sharing system as claimed in claim 7, wherein the Bluetooth verification number comprises a car owner electronic device identification number.
